(19) Europäisches Patentamt
European Patent Office
Office européen des brevets

(11) Publication number: **0 031 385**
**A1**

(12) # EUROPEAN PATENT APPLICATION

published in accordance with Art. 158(3) EPC

(21) Application number: **80900989.7**

(22) Date of filing: **28.05.80**

Data of the international application taken as a basis:

(86) International application number: **PCT/JP 80/00114**

(87) International publication number: **WO 80/02689 (11.12.80 80/28)**

(51) Int. Cl.³: **C 08 G 12/20**, C 07 C 125/07, C 07 C 125/077

(30) Priority: **30.05.79 JP 66046/79**

(43) Date of publication of application: **08.07.81 Bulletin 81/27**

(84) Designated Contracting States: **FR**

(71) Applicant: **MITSUI TOATSU CHEMICALS, INCORPORATED, 2-5 3-chome Kasumigaseki, Chiyoda-Ku Tokyo 100 (JP)**

(72) Inventor: **HASEGAWA, Seiji, 1541, Yabe-cho Totsuka-ku, Yokohama-shi Kanagawa, 244 (JP)**
Inventor: **Miyata, Katsuharu, 1071-2, Nakano-cho Totsuka-ku, Yokohama-shi Kanagawa, 247 (JP)**
Inventor: **AOKI, Shinobu, 1612, Kosugaya-cho Totsuka-ku, Yokohama-shi Kanagawa, 247 (JP)**
Inventor: **HARA, Isao, 372-6, Ninomiya Ninomiya-cho, Naka-gun Kanagawa, 259-01 (JP)**

(74) Representative: **Bressand, Georges et al, c/o CABINET LAVOIX 2 Place d'Estienne d'Orves, F-75441 Paris Cedex 09 (FR)**

(54) **PROCESS FOR PREPARING POLYMETHYLENEPOLYPHENYL POLYCARBAMATE.**

(57) A process for preparing polymethylenepolyphenyl carbamate, which comprises reacting a specific N-phenylcarbamate with formaldehyde or a formaldehyde-producing material in the presence of trifluoroboron or the complex salt thereof at a high reaction rate.

EP 0 031 385 A1

0031385

SPECIFICATION

# Process for Production of Polymethylenepolyphenyl Polycarbamates

TITLE MODIFIED
see front page

## TECHNICAL FIELD

This invention relates to an improved process for producing polymethylenepolyphenyl polycarbamates from N-phenylcarbamates and formaldehyde.

## BACKGROUND ART

Polymethylenepolyphenyl polycarbamates are substances which are useful as raw materials for medicines, agricultural chemicals, polyamides and polyurethanes. Thermal decomposition of polymethylenepolyphenyl polycarbamates can yield the corresponding polymethylenepolyphenyl polyisocyanates. In particular, bis(4-isocyanatophenyl)-methane is useful as a raw material for production of polyurethane elastomers and coating agents, and it has been desired to develop an industrially advantageous process for production of bis-(4-carbamatephenyl)-methane which can be its raw material.

The reaction of the corresponding polymethylenepolyphenyl polyisocyanate with an alcohol is known as a process for producing a polymethylenepolyphenyl polycarbamate. According to this process, however, the production of the starting polymethylenepolyphenyl isocyanate requires the use of strongly poisonous aniline or phosgene, and a method for producing the starting compound is complex.

Another known process for producing polymethylenepolyphenyl polycarbamates involves reaction of the corresponding polymethylenepolyphenyl polyamines with alkyl chloroformates. This process, however, cannot be an industrially feasible process because the starting polymethylenepolyphenyl polyamines and alkyl chloroformates are fairly toxic, or strongly irritating and lend themselves to difficult handling, and moreover, a method for producing such starting compounds is complex.

Reaction of N-phenylcarbamates with formaldehyde is known as still another process for producing polymethylenepolyphenyl polycarbamates. For example, the specification of West German Patent No. 1,042,891 states that N-phenylethylcarbamate and formaldehyde are heated with an aqueous solution of hydrochloric acid to give a condensation product. But since the reaction is very slow, large amounts of the unreacted materials remain even after performing the reaction for a long period of time, and by-products are formed in large amounts.

It is an object of this invention to provide a process wherein a polymethylenepolyphenyl polycarbamate can be produced in a high yield at a high reaction rate.

Another object of this invention is to provide a process wherein a polymethylenepolyphenyl polycarbamate can be produced economically by a simple operation.

DISCLOSURE OF THE INVENTION

The present invention provides a process for producing polymethylenepolyphenyl polycarbamates shown below.

A process for producing polymethylenepolyphenyl polycarbamates represented by the following general formula (II)

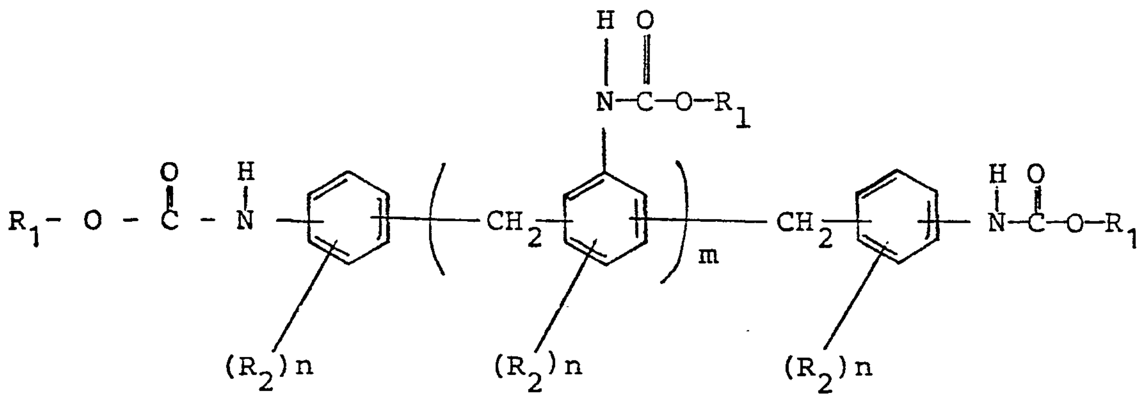
(II)

wherein $R_1$ represents a lower alkyl or cycloalkyl group having 1 to 6 carbon atoms, $R_2$ represents a hydrogen atom, a halogen atom or a lower alkyl or alkoxy group having 1 to 6 carbon atoms, n represents a number of 1 to 4, and m represents zero or an integer of 1 to 5,

which comprises reacting an N-phenylcarbamate represented by the general formula (I)

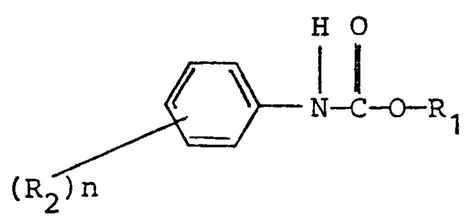
(I)

wherein $R_1$, $R_2$ and n are as defined in general formula (II), with formaldehyde or a formaldehyde-generating substance,

characterized in that the reaction is carried out in the presence of, as a catalyst, boron trifluoride or its complex salt.

BEST MODE OF CARRYING OUT THE INVENTION

The N-phenylcarbamate used in the process of this invention is expressed by the aforesaid general formula (I), and for example, includes N-phenylcarbamates of general formula (I) wherein $R_1$ is an alkyl group such as methyl, ethyl, n-propyl, iso-propyl, n-butyl, sec-butyl, iso-butyl, tert-butyl, pentyl groups derived from n-pentane and isomers thereof, and hexyl groups derived from n-hexane and isomers thereof, or a cycloalkyl group such as cyclopentyl or cyclohexyl; and $R_2$ is a hydrogen atom, a halogen atom such as chlorine, bromine or fluorine, an alkyl group such as methyl, ethyl, n-propyl, iso-propyl, n-butyl, sec-butyl, iso-butyl, tert-butyl, pentyl groups derived from n-pentane or isomers thereof, or hexyl groups derived from n-hexane and isomers thereof, or an alkoxy group containing such an alkyl group as a constituent.

More specific examples include N-phenylalkylcarbamates of general formula (I) wherein $R_1$ is the aforesaid alkyl group and $R_2$ is a hydrogen atom, N-halophenylalkylcarbamates wherein $R_1$ is the aforesaid alkyl group and $R_2$ is the aforesaid halogen atom, N-alkylphenylalkylcarbamates wherein $R_1$ and $R_2$ are the aforesaid alkyl groups, N-alkylphenylalkylcarbamates wherein $R_1$ is the aforesaid alkyl group and $R_2$ is the aforesaid alkoxy group, N-phenylcyclopentylcarbamate or N-phenylcyclohexyl-

carbamate wherein $R_1$ is a cyclopentyl or cyclohexyl group and $R_2$ is a hydrogen atom, N-halophenylcyclopentylcarbamates or N-halophenylcyclohexylcarbamates wherein $R_1$ is a cyclopentyl or cyclohexyl group and $R_2$ is the aforesaid halogen atom, N-alkylphenylcyclopentylcarbamates or N-alkylphenylcyclohexylcarbamates wherein $R_1$ is a cyclopentyl or cyclohexyl group and $R_2$ is an alkyl group, and N-alkoxyphenylcyclopentylcarbamates or N-alkoxyphenylcyclohexylcarbamates wherein $R_1$ is a cyclopentyl or cyclohexyl group and $R_2$ is the aforesaid alkoxy group. Preferably, there can be cited N-phenylmethylcarbamate, N-phenylethylcarbamate, N-phenyl-n-propylcarbamate, N-phenyl-iso-propylcarbamate, N-phenyl-n-butylcarbamate, N-phenyl-sec-butylcarbamate, N-phenyl-iso-butylcarbamate, N-phenyl-tert-butylcarbamate, N-phenylpentylcarbamate, N-phenylhexylcarbamate, N-o-chlorophenylmethylcarbamate, N-o-chlorophenylethylcarbamate, N-o-chlorophenyl-iso-propylcarbamate, N-o-chlorophenyl-iso-butylcarbamate, N-o-methylphenylmethylcarbamate, N-o-methylphenylethylcarbamate, N-phenylcyclohexylcarbamate, N-o-chlorophenylcyclohexylcarbamate, N-o-methylphenylcyclohexylcarbamate, N-m-methoxyphenylmethylcarbamate, and N-phenylcyclopentylcarbamate.

In the process of this invention, formaldehyde and formaldehyde-generating substances are used as sources of formaldehyde. The formaldehyde-generating substances, as referred to herein, denote all substances which generate formaldehyde during the reaction under the reaction conditions, and specifically include an aqueous solution of formaldehyde,

paraformaldehyde, methylal and other formals.

The catalyst used in the process of this invention is boron trifluoride or a complex salt of boron trifluoride with an ether, acetic acid, water, an alcohol-ester, an amine, etc.

The amount of the catalyst used is generally in the range of 0,001 to 10 moles, preferably 0.005 to 1 mole, per mole of the starting N-phenylcarbamate. If the amount is less than 0.001 mole, the reaction becomes slow. On the other hand, use of the catalyst in an amount of more than 10 moles is permissible, but generally, it is not necessary to use more than 10 moles.

In the practice of the present invention, the amount of formaldehyde (or the formaldehyde-generating substance) used is generally 0.1 to 10 moles, preferably 0.2 to 2 moles, per mole of the N-phenylcarbamate. If the amount of formaldehyde is too small, the amount of the unreacted N-phenylcarbamate increases. If it is too large, a polynuclear polymethylenepolyphenyl polycarbamate having 3 or more phenyl groups is formed in a large amount.

The process of this invention can be performed in the absence of solvent, but preferably, the reaction is carried out in a homogeneous system using a solvent. Examples of the solvent used include aliphatic hydrocarbons ranging from pentane, hexane, heptane, octane, nonane and decane to n-hexadecane and n-octadecane, alicyclic hydrocarbons such as cyclopentane, methylcyclopentane, ethylcyclopentane, cyclohexane, methylcyclohexane, ethylcyclohexane and cycloheptane, halogenated hydrocarbons such as chloroform, methylene chloride, carbon

tetrachloride, dichloroethane, trichloroethane and tetrachloroethane, alkyl esters of fatty acids such as ethyl acetate, aromatic hydrocarbons such as benzene, toluene, xylene, ethylbenzene, monochlorobenzene and dichlorobenzene, and ethers such as diethyl ether, dioxane and tetrahydrofuran. Among these, benzene and dichloroethane are especially preferred.

The reaction temperature is preferably $20^{\circ}$ to $200^{\circ}C$, especially preferably $30^{\circ}$ to $150^{\circ}C$.

Generally, the process of this invention is performed by adding formaldehyde or the formaldehyde-generating substance and boron trifluoride or its complex salt to the N-phenylcarbamate in the absence of solvent or as a solution or suspension in a solvent properly selected from the aforesaid solvents, and stirring the resulting mixture at a predetermined temperature. If desired, this reaction can be performed while separating the water in the reaction system and removing it out of the reaction system. In many cases, depending upon the solvent or the reaction conditions used, such an operation is desirable.

The process of this invention can also be performed by a continuous reaction mode wherein a solution or suspension of the starting materials, solvent and catalyst in suitable proportions is continuously fed to the reaction solution, and after a predetermined residence time, the reaction mixture is continuously discharged.

The reaction time differs depending upon the amounts of the starting materials and catalyst, the mode of the reaction,

the reaction conditions, etc. In the case of a batchwise reaction, it is generally 0.5 to 10 hours.

When a solvent is used, the reaction product obtained after the reaction is usually present as a solution in the solvent or as a solid precipitate. The desired product can therefore be obtained by an ordinary separating operation such as distillation or filtration.

According to the process of this invention, the final desired product can be obtained at a higher rate of reaction than in known processes. In other words, a higher conversion can be obtained wihtin a shorter period of time than in the known processes.

Furthermore, since a small amount of the highly active catalyst is used in the process of this invention, the operation is easier than in the case of using a large amount of aqueous hydrochloric acid solution, etc. in the conventional known processes. Hence, it is an economical manufacturing process.

According to the process of this invention, the resulting product is generally a mixture of polymethylenepolyphenyl polycarbamates consisting of a binuclear product of general formula (II) in which m is zero as a main ingredient, and a minor amount of a polynuclear product of general formula (II) in which m is 1 or more. This product has a composition and properties suitable for use as a raw material for production of polymethylenepolyphenyl polyisocyanates which are useful for production of polyurethanes.

The following Examples illustrate the process of this invention further. In these Examples, the products were

analyzed by liquid chromatography using naphthalene as an internal standard.

Example 1

A 100 ml flask equipped with a thermometer, a stirrer and a dropping funnel was charged with 20 g of N-phenylethylcarbamate, 8.5 g of boron trifluoride diethyletherate, 50 ml of benzene and 1.8 g of paraformaldehyde. The contents were stirred at 80°C for 2 hours in an oil bath. After the reaction, the reaction mixture was distilled under reduced pressure to distill off the solvent and obtain 20.8 g of a product. The product was dissolved in tetrahydrofuran, and analyzed by liquid chromatography. The product was found to be composed of 43% by weight of bis-(4-ethylcarbamatephenyl)-methane (binuclear product), 43% by weight of polymethylenepolyphenyl polyethylcarbamate having 3 or more phenyl groups, and 12% of the unreacted N-phenylethylcarbamate. The reaction conversion of the starting N-phenylethylcarbamate was 88%. The yield (selectivity) of the binuclear product based on the consumed starting N-phenylethylcarbamate was 49%. The yield (selectivity) of the polymethylenepolyphenyl polyethylcarbamates having 3 or more phenyl groups on the same basis was 49%.

Example 2

The same reaction as in Example 1 was carried out except that 1.7 g of the boron trifluoride diethyletherate was used. The product was analyzed. It was found that the conversion of the starting N-phenylethylcarbamate was 75%, the selectivity of the polymethylenepolyphenyl polyethylcarbamate having 3 or more phenyl groups was 35%.

Comparative Examples 1 and 2

The same reaction as in Example 1 was carried out at 80°C for 2 hours, or at 98° to 100°C for 5 hours, using 20 g of N-phenylethylcarbamate, 10 g of 36% hydrochloric acid, 50 g of water and 7.3 g of a 35% aqueous solution of formaldehyde. The results are shown in Table 1.

Table 1

| Comparative Example | Conditions | | Conversion (%) | Selectivity of the binuclear product (%) | Selectivity of the product with 3 or more phenyl groups (%) |
|---|---|---|---|---|---|
| | Temperature (°C) | Time (hr) | | | |
| 1 | 80 | 2 | 5 | 0 | 0 |
| 2 | 98-100 | 5 | 29 | 40 | 18 |

Examples 3 and 4

The same reaction as in Example 1 was carried out except that the type of the N-phenylcarbamate was varied. The results are shown in Table 2.

Table 2

| Example | N-phenylcarbamate | Conversion | Selectivity of the binuclear product (%) | Selectivity of the product with 3 or more phenyl groups (%) |
|---|---|---|---|---|
| 3 | N-phenylmethylcarbamate | 95 | 60 | 37 |
| 4 | N-phenylisobutylcarbamate | 80 | 45 | 50 |

Example 5

The same reaction as in Example 1 was carried out except that 8.5 g of boron trifluoride diethyletherate, 50 ml of dioxane and 4.9 g of a 37% aqueous solution of formaldehyde were used.

The product was analyzed, and found to be composed of 40% of bis-(4-ethylcarbamatephenyl)-methane, 27% of polymethylenepolyphenyl polycarbamates having 3 or more phenyl groups, and 20% of the unreacted N-phenylethylcarbamate. The selectivity of the unreacted N-phenylethylcarbamate. The selectivity of the bis-(4-ethylcarbamatephenyl)-methane was 50%, and the selectivity of the polymethylene polycarbamates having 3 or more phenyl groups was 34%.

CLAIMS

1. A process for producing polymethylenepolyphenyl polycarbamates represented by the general formula (II)

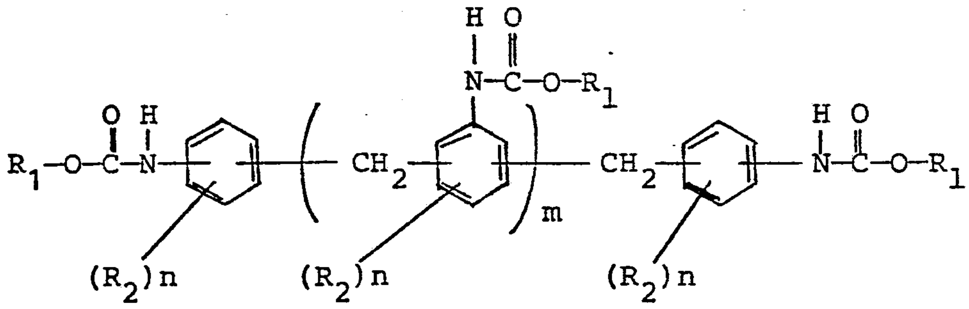

(II)

wherein $R_1$ represents a lower alkyl or cycloalkyl group having 1 to 6 carbon atoms, $R_2$ represents a hydrogen atom, a halogen atom or a lower alkyl or alkoxy group having 1 to 6 carbon atoms, n represents a positive integer of 1 to 4, and m represents zero or a positive integer of 1 to 5, which comprises reacting an N-phenylcarbamate represented by the general formula (I)

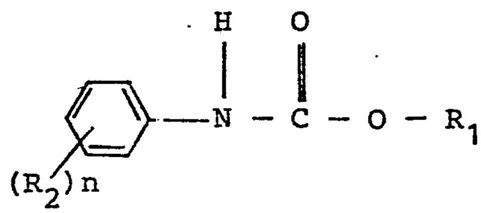

(I)

wherein $R_1$, $R_2$ and n are as defined in general formula (II), with formaldehyde or a formaldehyde-generating substance, characterized in that the reaction is carried out in the presence of, as a catalyst, boron trifluoride or its complex salt.

2. The process as claimed in claim 1 wherein said phenylcarbamate is selected from N-phenylethylcarbamate, N-phenylmethylcarbamate and N-phenylisopropylcarbamate.

3. The process as claimed in claim 2 wherein said phenylcarbamate is N-phenylethylcarbamate.

4. The process as claimed in claim 1 wherein said catalyst is boron trifluoride diethyletherate.

5. The process as claimed in claim 4 wherein the amount of the boron trifluoride diethyletherate is 0.005 to 1 mole per mole of said N-phenylcarbamate.

6. The process as claimed in claim 1 wherein said formaldehyde-generating substance is paraformaldehyde or an aqueous solution of formaldehyde.

7. The process as claimed in claim 6 wherein the amount of the paraformaldehyde or the aqueous solution of formaldehyde is 0.2 to 2 moles per mole of the N-phenylcarbamate.

8. The process as claimed in claim 1 wherein said N-phenylcarbamate is N-phenylethylcarbamate,N-phenylmethylcarbamate or N-phenylisopropylcarbamate,the amount of paraformaldehyde or an aqueous solution of formaldehyde is 0.2 to 2 moles,as formaldehyde, per mole of the N-phenylcarbamate,and boron trifluoride diethyletherate is used in an amount of 0.005 to 1 mole per mole of the N-phenylcarbamate.

9. The process as claimed in claim 1 wherein the reaction is carried out at a temperature of from 30° to 150°C.

10. The process as claimed in claim 1 wherein the reaction is carried out in an organic solvent.

11. The process as claimed in claim 10 wherein said organic solvent is benzene or dichloroethane.

# INTERNATIONAL SEARCH REPORT

International Application No PCT/JP80/00114

0031385

**I. CLASSIFICATION OF SUBJECT MATTER** (if several classification symbols apply, indicate all) [3]

According to International Patent Classification (IPC) or to both National Classification and IPC

Int. Cl.$^3$ C08G 12/20, C07C 125/07, C07C 125/077

**II. FIELDS SEARCHED**

Minimum Documentation Searched [4]

| Classification System | Classification Symbols |
|---|---|
| I P C | C08G 12/20, C07C 125/07, C07C 125/073, C07C 125/077 |

Documentation Searched other than Minimum Documentation to the Extent that such Documents are Included in the Fields Searched [5]

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| | | |

* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

**IV. CERTIFICATION**

| Date of the Actual Completion of the International Search [2] | Date of Mailing of this International Search Report [2] |
|---|---|
| August 19, 1980 (19.08.80) | August 25, 1980 (25.08.80) |
| International Searching Authority [1] | Signature of Authorized Officer [20] |
| Japanese Patent Office | |

Form PCT/ISA/210 (second sheet) (October 1977)